# EUROPEAN PATENT SPECIFICATION

(11) **EP 2 783 140 B1**
(45) Date of publication and mention of the grant of the patent: **23.09.2015**
(21) Application number: 12794912.1
(22) Date of filing: 22.11.2012
(51) Int. Cl.: F16J 15/32

(54) **SHAFT SEALING DEVICE**
WELLENDICHTUNGSVORRICHTUNG
DISPOSITIF DE JOINT D'ARBRE

(30) Priority: 22.11.2011 NO 20111607
(43) Date of publication of application: 01.10.2014
(73) Proprietor: Narvik Composite AS, 8512 Narvik (NO)
(72) Inventor: VESTNES, Jarle, N-8516 Narvik (NO); JAKOBSEN, Hans, Einar, N-8517 Narvik (NO)
(74) Representative: Onsagers AS
(86) International application number: PCT/EP2012/073335
(87) International publication number: WO 2013/076189

(56) References cited:
- EP-A1- 1 890 061
- GB-A- 775 849
- US-A- 3 099 454

## Description

### FIELD OF THE INVENTION

The present invention relates to a shaft sealing device for protecting a bearing of a roller device supporting a conveyor belt. The sealing device is especially provided for supporting devices for supporting a conveyor belt used for transporting heavy load, such as ore, coal, stones and crushed stones, various bulk materials etc.

### BACKGROUND OF THE INVENTION

A roller device comprises a tubular or cylindrical roller body and a supporting arrangement, where the roller body is supported by and rotably mounted to a foundation by means of the supporting arrangement. The supporting arrangement comprises bearings provided between the roller body and a shaft. Such roller device are used for supporting a conveyor belt used for transporting heavy load as mentioned above. These conveyor belts may be several kilometers long and do often carry the heavy load at a high transport speed.

In such environments, there are particles such as debris, dust, sand, which may damage the bearings. Moreover, such conveyor belts may be located in humid environments, such as outdoors where it may rain, or inside plants wherein water or other fluids are used. Hence, the particles may also mix with water. The water with particles may also damage the bearings. Consequently, a sealing device may be provided in order to prevent particles to arrive at the bearings. The sealing device will then prevent damage on the bearings of the roller device

The roller body will be gradually worn due to friction between the conveyor belt and the section of the roller body. This may cause an uneven rotation of the roller body. Moreover, the total force applied from the conveyor belt and the heavy load to the roller body may cause the shaft to bend slightly, which may increase the risk of damaging the sealing device or increase the amount of particles which may reach the bearing.

When the bearing stops rotating, it may overheat and start a fire. Alternatively, the entire roller body stops rotating. A result of this is that the conveyor belt is gliding over the roller body instead of bringing the roller body into rotation. Consequently the friction between the conveyor belt and the roller body increases, which increases the wear of the roller body and also the wear of the conveyor belt.

In this situation, there are two risks. The first risk is related to the increased temperature due to the increased friction, which may cause the conveyor belt to ignite, which in turn will damage the conveyor belt severely. The second risk is that the roller body, for example a roller body made of steel, becomes so worn that a hole is formed in the outer surface of the roller body.

In practice, the costs and work involved in replacing an entire conveyor belt are so large that when a bearing is damaged, the conveyor belt will be stopped immediately until the bearing and possibly also the roller body is replaced.

CN 201102803 describes a roller device where the inside of two ends of a roller tube are coaxially connected with a roller axis by a bearing base and a bearing in the bearing base. Two ends of every bearing are provided with a sealing component. A circlip is arranged in the ring groove of the roller axle at the outer end of the two bearings, where the circlip is arranged between the outside sealing and the inside sealing. The inside sealing controls the position of the bearing on the roller axis. The outside of the sealing component at the outside of the two bearings is fixed with a contact seal by a protective cover. The outer margin of the central hole of the contact seal is provided with a flexible sealing edge close to the roller axis.

In general, radial rip seals or oil seals are used to form a contact point between the lip and the shaft not allowing oil or particles to pass through. The main purpose of the lip seal is to prevent lubricating oil from leaking out from the bearing and at the same time prevent particles to enter the bearing. Examples of such seals are known from for example US 3 099 454, GB 775 849 and EP 1 890 061.

The object of the invention is to provide a shaft sealing device which is protecting a bearing of a roller device from particles. One object of the shaft sealing device is that it should protect the bearing particles even if the shaft is moving relative to the shaft sealing device. Moreover it is an object to prevent or limit accumulation of droplets on the shaft sealing device and also on the shaft.

Another object is to reduce wear on the shaft sealing device and/or the shaft if the shaft is moving radially relative to the shaft sealing device.

### SUMMARY OF THE INVENTION

The present invention relates to a shaft sealing device, comprising:
- a first cover device comprising a first substantially planar section having second shaft opening for the shaft;
- a second cover device comprising a second substantially planar section having a third shaft opening for the shaft; where the first cover device and the second cover device are sealingly connected to each other at their respective radial outer circumference;
- a flexible sealing element;
characterized in that the shaft sealing device comprises: - a sleeve device comprising a sleeve section having a first shaft opening for a shaft and a substantially planar flange section radially protruding from the sleeve section, where the diameter of the first shaft opening is adapted to the outer diameter of the shaft and where the sleeve section is allowed to rotate around the shaft;
where the first planar section of the first cover device is provided parallel with the flange section, where the second shaft opening of the first cover device is larger than the first shaft opening, thereby allowing a relative radial movement between the sleeve device and the first cover device;
where the third shaft opening of the second cover device is larger than the sleeve section, thereby allowing a relative radial movement between the sleeve device and the second cover device; where the third shaft opening is provided radially outside the sleeve section;
where the flexible sealing element is arranged to seal an annulus provided between the second substantially planar section and the sleeve section.

In one aspect, the first cover device comprises a first rim protruding perpendicular from the first substantially planar section towards the second cover device, where the diameter of the first rim is larger than the diameter of the substantially planar flange section.

In one aspect, the second cover device comprises a second rim protruding perpendicular from the second substantially planar section towards the first cover device, where the diameter of the second rim is larger than the diameter of the substantially planar flange section.

In one aspect, the flexible sealing element is fixed to the second cover device.

In one aspect, the second substantially planar section of the second cover device comprises a rim fixed to the flexible sealing element.

In one aspect, the device comprises a rotation preventing device for preventing rotation of the sleeve device in relation to the first and/or second cover device.

In one aspect, the rotation preventing device comprises a rotating preventing pin inserted into a rotating preventing opening.

In one aspect, the rotation preventing device comprises a first rotating preventing opening in the flange section of the sleeve device and a second rotating preventing opening in the first substantially planar section of the first cover device, where the first opening has a larger cross sectional area than the cross sectional area of the second opening, and a rotating preventing pin provided through the first and second rotating preventing openings.

In one aspect, the sleeve section is protruding axially out from the third shaft opening of the second cover device.

### DETAILED DESCRIPTION

Embodiments of the invention will now be described with reference to the enclosed drawings, where:
Fig. 1 illustrates a cross sectional side view of a first embodiment of the sealing device;
Fig. 2a illustrates a cross sectional side view of a first cover device.
Fig. 2b illustrates a cross sectional side view of a sleeve device.
Fig. 2c illustrates a cross sectional perspective view of a second cover device.

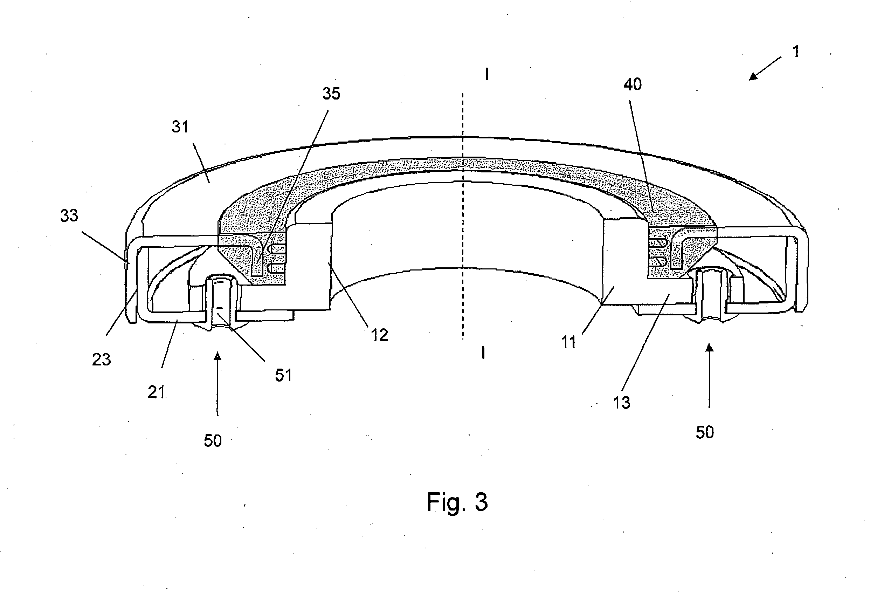

Fig. 3 illustrates a cross sectional view of the embodiment in fig. 1a, where a rotation preventing pin is present.

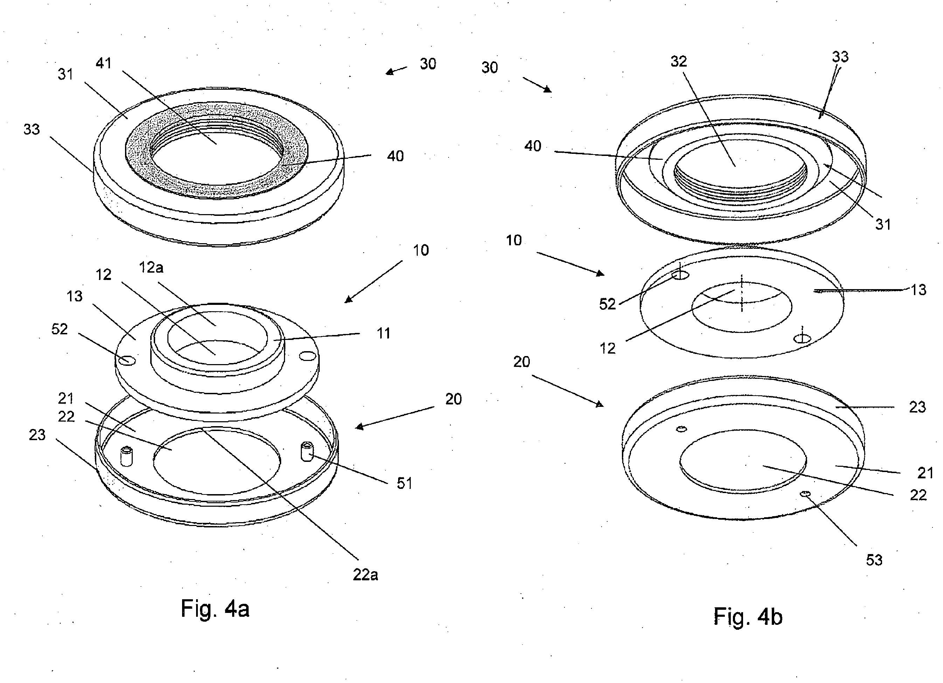

Fig. 4a illustrates an exploded perspective view from above of the embodiment in fig. 1.
Fig. 4b illustrates an exploded perspective view from below of the embodiment in fig. 1.
Fig. 5a illustrates one end of the roller device where the shaft sealing device is ready to be mounted;
Fig. 5b illustrates one end of the roller device after the shaft sealing device has been mounted.

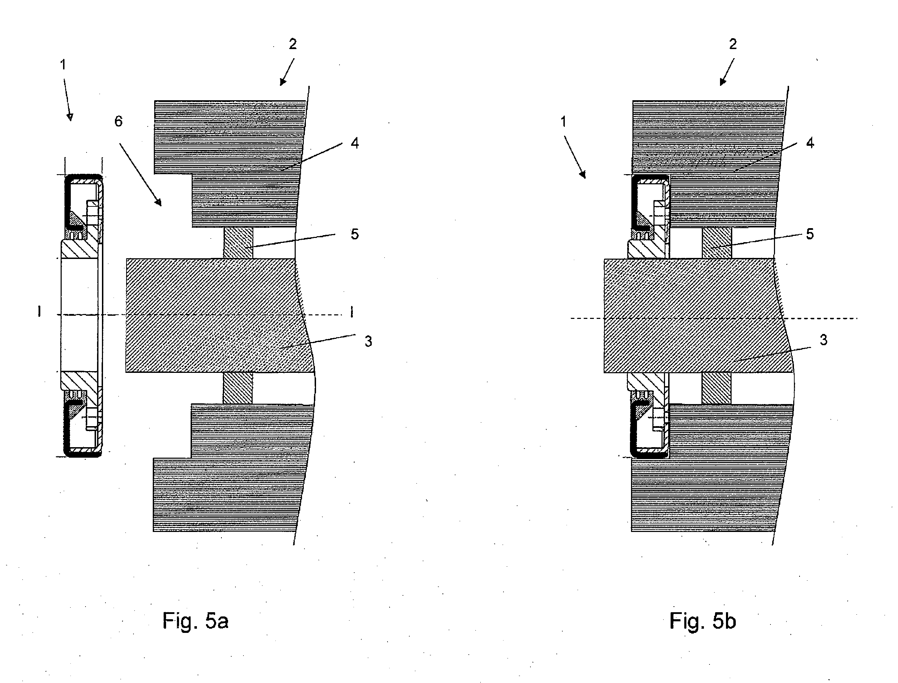

First, it is referred to fig. 5a, illustrating a shaft sealing device 1 according to the invention next to a roller device 2. The roller device 2 comprises a shaft 3 fixed to a shaft foundation (not shown). A roller body 4 is rotatably mounted to the shaft by means of bearings 5, typically one bearing in or near each end of the roller body 4. The roller body 4 is supporting a conveyor belt used for transporting heavy load, such as ore, coal, stones and crushed stones, various bulk materials etc. When the conveyor belt is moving, the roller device 2 will rotate with respect to the shaft 3. Hence, in the present embodiment, the shaft 3 is non-rotating. However, in alternative embodiments, the shaft may rotate while a body fixed to the shaft via bearing devices is non-rotating. The longitudinal axis of the shaft is denoted I-I and shown as a dashed line in the drawings.

The forces from the heavy load may cause bending of the roller body and/or the shaft and hence also relative movement between the shaft and the roller body, where the shaft sealing device should seal the bearing from the surroundings.

A compartment 6 may be provided in the end of the roller body 4, wherein the shaft sealing device 1 is to be inserted. Alternatively, the shaft sealing device 1 may be fixed to the end of the roller body 4.

It should be noted that the shaft sealing device is not transferring forces between the shaft and the roller body - this is the purpose of the bearing.

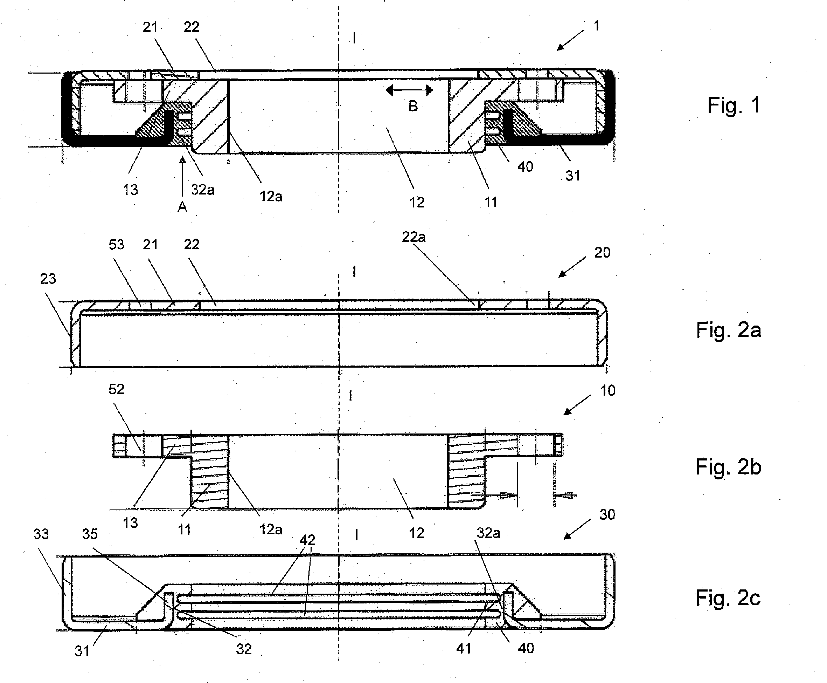

It is now referred to fig. 1 and fig. 2a-c. The shaft sealing device according to the first embodiment comprises a sleeve device 10, a first cover device 20, a second cover device 30 and a flexible sealing element 40.

The sleeve device 10 comprising a sleeve section 11 having a first shaft opening 12 for the shaft 3. A cylindrical inner surface of the sleeve section 11, generally denoted with reference number 12a, is forming the first shaft opening.

A substantially planar flange section 13 is radially protruding from the sleeve section 11. The sleeve section 11 and the planar flange section 13 may be provided as one unit made of the same material. In the present embodiment, the sleeve section 11 and the planar flange section 13 are made of a durable and abrasive resistant material such as polyamide (PA), polyurethanes (PUR), ultra-high-molecular-weight polyethylene (UHMWPE), polytetrafluoroethylene (PTFE), polyethylene (PE-HD) etc.

According to the above, the planar flange section 13 is arranged to be substantially parallel to the roller body 4, i.e. the planar flange section 13 is perpendicular to the longitudinal axis I-I of the shaft.

The diameter of the first shaft opening 12 is adapted to the outer diameter of the shaft 3. In the present embodiment, the first shaft opening 12 is adapted to the outer diameter of the shaft 3 so that the sleeve section 11 is allowed to rotate around the shaft 3, i.e. without forcing the sleeve device 10 to be stationary together with the shaft 3. However, the clearing should be as small as possible to avoid particles to pass through between the shaft 3 and the inner surface 12a of the shaft opening 12.

The first cover device 20 comprises a first substantially planar section 21 having a second shaft opening 22 for the shaft 3. A radially inner surface, generally denoted with reference number 22a, is forming the second shaft opening 22. In the present embodiment, the inner surface 22a is cylindrical, i.e. the second shaft opening 22 is circular when seen from above in fig. 2a. In an alternative embodiment, it may be possible to provide the second shaft opening 22 as a triangular, a rectangular or a polygonal opening.

The first planar section 21 is provided parallel with the flange section 13. Moreover, the second shaft opening 22 is larger than the first shaft opening 12. When the second shaft opening 22 is circular, the diameter of the second shaft opening 22 is larger than diameter of the first shaft opening 12. Consequently, a relative radial movement between the sleeve device 10 and the first cover device 20 is allowed when the shaft is inserted through the shaft openings.

The second cover device 30 comprises a second substantially planar section 31 having a third shaft opening 32 for the shaft 3. An inner surface, generally denoted with reference number 32a, is forming the third shaft opening 32. In fig. 1, the second cover device 30 is drawn with solid black. In the present embodiment, the inner surface 32a is cylindrical, i.e. the third shaft opening 32 is circular when seen from above in fig. 2c. 1. In an alternative embodiment, it may be possible to provide the third shaft opening 32 as a triangular, a rectangular or a polygonal opening.

Also the second substantially planar section 31 may be provided in parallel with the flange section 13, and hence also in parallel with the first planar section 21. However, this is strictly not necessary. The third shaft opening 32 is provided radially outside the sleeve section 11.

The third shaft opening 32 is larger than the sleeve section 11. When the third shaft opening 32 is circular and the sleeve section 11 is circular, the diameter of the third shaft opening 32 is larger than outer diameter of the sleeve section 11. Consequently, a relative radial movement between the sleeve device 10 and the second cover device 30 is allowed.

The flexible sealing element 40 is arranged to seal an annulus A (see fig. provided between the second substantially planar section 31 and the sleeve section 11. That is, the flexible sealing element 40 is arranged to seal the annulus defined between the inner surface 32a and the outer surface of the sleeve section 11. Consequently, particles and also fluid is prevented from entering in through the annulus. As shown in fig. 1 and fig. 2c, the flexible sealing element 40 comprises a circular opening 41 adapted to the outer surface of the sleeve section 11.

The flexible sealing element 40 may be made of a rubber material, nitriles (NBR), polytetrafluoroethylene (PTFE), polyurethanes (PUR), silicone or other flexible materials. Grooves 42 may be provided in the opening 41 to improve the flexibility of the sealing element 40.

Due to the flexible properties of the flexible sealing element 40, a relative radial movement between the sleeve device 10 and the first cover device 20, and between the sleeve device 10 and the second cover device 30, is still allowed.

In the present embodiment, the flexible sealing element 40 is fixed to the second substantially planar section 31. In an alternative embodiment, the flexible sealing element 40 may be fixed to the sleeve section 11.

If there is a radial movement of the sleeve device 10, the flexible sealing element 40 will adapt to the radial movement and still prevent particles and also fluid to enter through the annulus.

The first cover device 20 and the second cover device 30 are sealingly connected to each other at their respective radial outer circumference. Hence, a sealed joint is formed between the first cover device 20 and the second cover device 30. Consequently, it is not possible for particles or fluid to enter through the joint between the first cover device 20 and the second cover device 30. As shown in fig. 1, the first cover device 20 and the second cover device 30 are sealingly connected to each other at a distance from outermost part of the flange section 13 of the sleeve device 10, thereby allowing the sleeve device 10 to move radially in relation to the first and second cover devices 20, 30. In fig. 1, the arrow B is indicating the radial direction in which the sleeve device 10 is allowed to move in relation to the first and second cover devices 20, 30.

The first cover device 20 may comprise a first rim 23 protruding perpendicular from the first substantially planar section 21 towards the second cover device 30, where the inner diameter of the first rim 23 is larger than the outer diameter of the substantially planar flange section 13. Moreover, the second cover device 30 may comprise a second rim 33 protruding perpendicular from the second substantially planar section 31 towards the first cover device 20, where the inner diameter of the second rim 33 is larger than the outer diameter of the substantially planar flange section 13. The first rim 23 may then be sealingly connected to the second rim 33. In the present embodiment, the first rim 23 is provided radially inside the second rim 33. However, it is also possible to provide the second rim 33 radially inside the first rim 23. It is now referred to fig. 5a and fig. 5b. In the present embodiment the entire shaft sealing device 1 is fixed to the roller body 4. The shaft sealing device 1 may be press fitted into a corresponding opening of the roller body 4, or the shaft sealing device 1 may be glued to the roller body 4. Other alternatives are also possible. Consequently, under normal conditions, the entire shaft sealing device 1 is rotating together with the roller body 4, and there is a relative rotation between the shaft sealing device 1 and the shaft 3. Hence, the only way particles may enter through the sealing device is between the shaft 3 and the inner surface 12a of the sleeve section 11, or between the outer surface of the sleeve section 11 and the flexible sealing element 40.

As mentioned above, the flexible sealing element 40 is fixed to the second cover device 30. As shown in fig. 2c, the second substantially planar section 31 of the second cover device 30 may comprise a rim 35 fixed to the flexible sealing element 40. In fig. 2c the rim 35 protrudes perpendicular from the second substantially planar section 31 towards the second cover device 30.

The shaft sealing device 1 may further comprise a rotation preventing device 50 for preventing rotation of the sleeve device 10 in relation to the first and/or second cover device 20, 30. A relative rotation of the first and/or second cover device 20, 30 in relation to the sleeve device 10 may cause the flexible sealing element 40 to become wear-down very fast. The rotation preventing device 50 may prevent such incidents.

The rotation preventing device 50 may comprise a rotating preventing pin 51 inserted into a rotating preventing opening 52; 52, 53. In the present embodiment, the rotation preventing device 50 comprises a first rotating preventing opening 52 in the flange section 13 of the sleeve device 10 and a second rotating preventing opening 53 in the first substantially planar section 21 of the first cover device 20. A rotating preventing pin 51 is provided through the first and second rotating preventing openings 52, 53. It should be noted that the first opening 52 has a larger cross sectional area than the cross sectional area of the second opening 53. Hence, the radial relative movement between the sleeve device 10 and the first and second cover devices 20, 30 are still allowed. However, if the sleeve device 10 starts to rotate, the pin 51 will meet the rotating preventing opening 53. Consequently, the sleeve device 10 will stop rotating. In the present embodiments there are two rotating preventing openings 52, two rotating preventing opening 53 and two pins 51.

In an alternative embodiment, there is no rotating preventing opening 53 in the first substantially planar section 21. Instead, the pin 51 is fixed to the first substantially planar section 21 and is facing towards and inserted into the rotating preventing opening 52 of the substantially planar flange section 13. Alternatively, the pin could also be fixed to the substantially planar flange section 13 and is facing towards and inserted into an rotating preventing opening provided in the first substantially planar section 21.

In the present embodiment, the sleeve section 11 is protruding axially out from the third shaft opening 33 of the second cover device 30. In this way, fluid which flows down the surface 31 of the shaft sealing device 1 during rotation will be thrown off when arriving at the sleeve section 11.

In fig. 5a, the opening 6 is circular - and hence the first and second cover devices 20, 30 have a radial outer shape which is circular, i.e. the rims 23, 33 are circular. However, the opening 6 may have another shape, in which case the outer shape of the first and second cover devices 20, 30 should be adapted to the space of the opening 6.

## Claims

1. Shaft sealing device (1), comprising:
- a first cover device (20) comprising a first substantially planar section (21) having second shaft opening (22) for the shaft (3);
- a second cover device (30) comprising a second substantially planar section (31) having a third shaft opening (32) for the shaft (3); where the first cover device (20) and the second cover device (30) are sealingly connected to each other at their respective radial outer circumference;
- a flexible sealing element (40);
**characterized in that** the shaft sealing device (1) comprises:
- a sleeve device (10) comprising a sleeve section (11) having a first shaft opening (12) for a shaft (3) and a substantially planar flange section (13) radially protruding from the sleeve section (11), where the diameter of the first shaft opening (12) is adapted to the outer diameter of the shaft (3) and where the sleeve section (11) is allowed to rotate around the shaft (3);
where the first planar section (21) of the first cover device (20) is provided parallel with the flange section (13), where the second shaft opening (22) of the first cover device (20) is larger than the first shaft opening (12), thereby allowing a relative radial movement between the sleeve device (10) and the first cover device (20);
where the third shaft opening (32) of the second cover device (30) is larger than the sleeve section (11), thereby allowing a relative radial movement between the sleeve device (10) and the second cover device (30); where the third shaft opening (32) is provided radially outside the sleeve section (11);
where the flexible sealing element (40) is arranged to seal an annulus provided between the second substantially planar section (31) and the sleeve section (11).

2. Shaft sealing device (1) according to claim 1, where the first cover device (20) comprises a first rim (23) protruding perpendicular from the first substantially planar section (21) towards the second cover device (30), where the diameter of the first rim (23) is larger than the diameter of the substantially planar flange section (13).

3. Shaft sealing device (1) according to claim 1 or 2, where the second cover device (30) comprises a second rim (33) protruding perpendicular from the second substantially planar section (31) towards the first cover device (20), where the diameter of the second rim (33) is larger than the diameter of the substantially planar flange section (13).

4. Shaft sealing device (1) according to any one of the above claims, where the flexible sealing element (40) is fixed to the second cover device (30).

5. Shaft sealing device (1) according to claim 4, where the second substantially planar section (31) of the second cover device (30) comprises a rim (35) fixed to the flexible sealing element (40).

6. Shaft sealing device (1) according to any one of the above claims, further comprising a rotation preventing device (50) for preventing rotation of the sleeve device (10) in relation to the first and/or second cover device (20, 30).

7. Shaft sealing device (1) according to claim 6, where the rotation preventing device (50) comprises a rotating preventing pin (51) inserted into a rotating preventing opening (52; 52, 53).

8. Shaft sealing device (1) according to claim 6, where the rotation preventing device (50) comprises a first rotating preventing opening (52) in the flange section (13) of the sleeve device (10) and a second rotating preventing opening (53) in the first substantially planar section (21) of the first cover device (20), where the first opening (52) has a larger cross sectional area than the cross sectional area of the second opening (53), and a rotating preventing pin (51) provided through the first and second rotating preventing openings (52, 53).

9. Shaft sealing device (1) according to any one of the above claims, where the sleeve section (11) is protruding axially out from the third shaft opening (33) of the second cover device (30).

## Patentansprüche

1. Wellendichtungsvorrichtung (1), Folgendes aufweisend:
- eine erste Abdeckungsvorrichtung (20), die einen ersten, im Wesentlichen planflächigen Abschnitt (21) mit einer zweiten Wellenöffnung (22) für die Welle (3) aufweist;
- eine zweite Abdeckungsvorrichtung (30), die einen zweiten, im Wesentlichen planflächigen Abschnitt (31) mit einer dritten Wellenöffnung (32) für die Welle (3) aufweist; wobei die erste Abdeckungsvorrichtung (20) und die zweite Abdeckungsvorrichtung (30) abdichtend an ihrem jeweiligen radialen Außenumfang miteinander verbunden sind;
- ein flexibles Dichtungselement (40);
**dadurch gekennzeichnet, dass** die Wellendichtungsvorrichtung (1) aufweist:
- eine Hülsenvorrichtung (10), die einen Hülsenabschnitt (11) mit einer ersten Wellenöffnung (12) für eine Welle (3) und einen im Wesentlichen planflächigen Flanschabschnitt (13) aufweist, der radial vom Hülsenabschnitt (11) vorsteht, wobei der Durchmesser der ersten Wellenöffnung (12) an den Außendurchmesser der Welle (3) angepasst ist, und wobei sich der Hülsenabschnitt (11) um die Welle (3) drehen darf;
wobei der erste planflächige Abschnitt (21) der ersten Abdeckungsvorrichtung (20) parallel zum Flanschabschnitt (13) vorgesehen ist, wobei die zweite Wellenöffnung (22) der ersten Abdeckungsvorrichtung (20) größer ist als die erste Wellenöffnung (12), wodurch eine relative Radialbewegung zwischen der Hülsenvorrichtung (10) und der ersten Abdeckungsvorrichtung (20) ermöglicht ist;
wobei die dritte Wellenöffnung (32) der zweiten Abdeckungsvorrichtung (30) größer ist als der Hülsenabschnitt (11), wodurch eine relative Radialbewegung zwischen der Hülsenvorrichtung (10) und der zweiten Abdeckungsvorrichtung (30) ermöglicht ist; wobei die dritte Wellenöffnung (32) radial außerhalb des Hülsenabschnitts (11) vorgesehen ist;
wobei das flexible Dichtungselement (40) so angeordnet ist, dass es einen Ringraum abdichtet, der zwischen dem zweiten, im Wesentlichen planflächigen Abschnitt (31) und dem Hülsenabschnitt (11) vorgesehen ist.

2. Wellendichtungsvorrichtung (1) nach Anspruch 1, wobei die erste Abdeckungsvorrichtung (20) einen ersten Rand (23) aufweist, der senkrecht vom ersten, im Wesentlichen planflächigen Abschnitt (21) zur zweiten Abdeckungsvorrichtung (30) vorsteht, wobei der Durchmesser des ersten Rands (23) größer ist als der Durchmesser des im Wesentlichen planflächigen Flanschabschnitts (13).

3. Wellendichtungsvorrichtung (1) nach Anspruch 1 oder 2, wobei die zweite Abdeckungsvorrichtung (30) einen zweiten Rand (33) aufweist, der senkrecht vom zweiten, im Wesentlichen planflächigen Abschnitt (31) zur ersten Abdeckungsvorrichtung (20) vorsteht, wobei der Durchmesser des zweiten Rands (33) größer ist als der Durchmesser des im Wesentlichen planflächigen Flanschabschnitts (13).

4. Wellendichtungsvorrichtung (1) nach einem der vorhergehenden Ansprüche, wobei das flexible Dichtungselement (40) an der zweiten Abdeckungsvorrichtung (30) befestigt ist.

5. Wellendichtungsvorrichtung (1) nach Anspruch 4, wobei der zweite, im Wesentlichen planflächige Abschnitt (31) der zweiten Abdeckungsvorrichtung (30) einen Rand (35) aufweist, der am flexiblen Dichtungselement (40) befestigt ist.

6. Wellendichtungsvorrichtung (1) nach einem der vorhergehenden Ansprüche, darüber hinaus eine Drehverhinderungsvorrichtung (50) aufweisend, um eine Drehung der Hülsenvorrichtung (10) in Bezug auf die erste und/oder zweite Abdeckungsvorrichtung (20, 30) zu verhindern.

7. Wellendichtungsvorrichtung (1) nach Anspruch 6, wobei die Drehverhinderungsvorrichtung (50) einen Drehverhinderungsstift (51) aufweist, der in eine Drehverhinderungsöffnung (52; 52, 53) eingesetzt ist.

8. Wellendichtungsvorrichtung (1) nach Anspruch 6, wobei die Drehverhinderungsvorrichtung (50) eine erste Drehverhinderungsöffnung (52) im Flanschabschnitt (13) der Hülsenvorrichtung (10) und eine zweite Drehverhinderungsöffnung (53) im ersten, im Wesentlichen planflächigen Abschnitt (21) der ersten Abdeckungsvorrichtung (20) aufweist, wobei die erste Öffnung (52) eine größere Querschnittsfläche als die Querschnittsfläche der zweiten Öffnung (53) hat, und einen Drehverhinderungsstift (51) aufweist, der durch die erste und zweite Drehverhinderungsöffnung (52, 53) hindurch vorgesehen ist.

9. Wellendichtungsvorrichtung (1) nach einem der vorhergehenden Ansprüche, wobei der Hülsenabschnitt (11) axial aus der dritten Wellenöffnung (33) der zweiten Abdeckungsvorrichtung (30) heraus vorsteht.

## Revendications

1. Dispositif d'étanchéité d'arbre (1), comprenant :
un premier dispositif de couvercle (20) comprenant une première section sensiblement plane (21) ayant une deuxième ouverture d'arbre (22) pour l'arbre (3) ;
un second dispositif de couvercle (30) comprenant une seconde section sensiblement plane (31) ayant une troisième ouverture d'arbre (32) pour l'arbre (3) ; dans lequel le premier dispositif de couvercle (20) et le second dispositif de couvercle (30) sont raccordés de manière étanche entre eux au niveau de leur circonférence externe radiale respective ;
un élément d'étanchéité flexible (40) ;
**caractérisé en ce que** le dispositif d'étanchéité d'arbre (1) comprend :
un dispositif de manchon (10) comprenant une section de manchon (11) ayant une première ouverture d'arbre (12) pour un arbre (3) et une section de bride sensiblement plane (13) faisant radialement saillie de la section de manchon (11), dans lequel le diamètre de la première ouverture d'arbre (12) est adapté au diamètre externe de l'arbre (3) et dans lequel la section de manchon (11) est autorisée à tourner autour de l'arbre (3) ;
dans lequel la première section plane (21) du premier dispositif de couvercle (20) est prévue parallèlement à la section de bride (13), dans lequel la deuxième ouverture d'arbre (22) du premier dispositif de couvercle (20) est plus grande que la première ouverture d'arbre (12), permettant ainsi un mouvement radial relatif entre le dispositif de manchon (10) et le premier dispositif de couvercle (20) ;
dans lequel la troisième ouverture d'arbre (32) du second dispositif de couvercle (30) est plus grande que la section de manchon (11), permettant ainsi un mouvement radial relatif entre le dispositif de manchon (10) et le second dispositif de couvercle (30) ; dans lequel la troisième ouverture d'arbre (32) est prévue radialement à l'extérieur de la section de manchon (11) ;
dans lequel l'élément d'étanchéité flexible (40) est agencé pour sceller un espace annulaire prévu entre la seconde section sensiblement plane (31) et la section de manchon (11).

2. Dispositif d'étanchéité d'arbre (1) selon la revendication 1, dans lequel le premier dispositif de couvercle (20) comprend un premier rebord (23) faisant saillie perpendiculairement de la première section sensiblement plane (21) vers le second dispositif de couvercle (30), dans lequel le diamètre du premier rebord (23) est plus grand que le diamètre de la section de bride sensiblement plane (13).

3. Dispositif d'étanchéité d'arbre (1) selon la revendication 1 ou 2, dans lequel le second dispositif de couvercle (30) comprend un second rebord (33) faisant saillie perpendiculairement de la seconde section sensiblement plane (31) vers le premier dispositif de couvercle (20), dans lequel le diamètre du second rebord (33) est plus grand que le diamètre de la section de bride sensiblement plane (13).

4. Dispositif d'étanchéité d'arbre (1) selon l'une quelconque des revendications précédentes, dans lequel l'élément d'étanchéité flexible (40) est fixé au second dispositif de couvercle (30).

5. Dispositif d'étanchéité d'arbre (1) selon la revendication 4, dans lequel la seconde section sensiblement plane (31) du second dispositif de couvercle (30) comprend un rebord (35) fixé sur l'élément d'étanchéité flexible (40).

6. Dispositif d'étanchéité d'arbre (1) selon l'une quelconque des revendications précédentes, comprenant en outre un dispositif anti-rotation (50) pour empêcher la rotation du dispositif de manchon (10) par rapport au premier et/ou second dispositif de couvercle (20, 30).

7. Dispositif d'étanchéité d'arbre (1) selon la revendication 6, dans lequel le dispositif anti-rotation (50) comprend une broche anti-rotation (51) insérée dans une ouverture anti-rotation (52 ; 52, 53).

8. Dispositif d'étanchéité d'arbre (1) selon la revendication 6, dans lequel le dispositif anti-rotation (50) comprend une première ouverture anti-rotation (52) dans la section de bride (13) du dispositif de manchon (10) et une seconde ouverture anti-rotation (53) dans la première partie sensiblement plane (21) du premier dispositif de couvercle (20), dans lequel la première ouverture (52) a une plus grande surface transversale que la surface transversale de la seconde ouverture (53), et une broche anti-rotation (51) prévue à travers les première et seconde ouvertures anti-rotation (52, 53).

9. Dispositif d'étanchéité d'arbre (1) selon l'une quelconque des revendications précédentes, dans lequel la section de manchon (11) fait axialement saillie à l'extérieur par la troisième ouverture d'arbre (33) du second dispositif de couvercle (30).
